Europäisches Patentamt

European Patent Office

Office européen des brevets

(11) Publication number: **0 197 536**
**B1**

## (12) EUROPEAN PATENT SPECIFICATION

(45) Date of publication of patent specification: **05.07.89**

(21) Application number: **86104729.8**

(22) Date of filing: **07.04.86**

(51) Int. Cl.⁴: **B 62 M 3/00**

(54) Improvements in or relating to bicycle sprocket drive assemblies.

(30) Priority: **10.04.85 US 721607**

(43) Date of publication of application:
**15.10.86 Bulletin 86/42**

(45) Publication of the grant of the patent:
**05.07.89 Bulletin 89/27**

(84) Designated Contracting States:
**CH DE FR GB IT LI SE**

(56) References cited:
**BE-A- 466 176**
**BE-A- 469 749**
**DE-A-2 532 856**
**FR-A-1 493 691**
**US-A-3 377 883**

(73) Proprietor: **THUN, INC.**
**Alfred Thun Road P.O. Box 3159**
**Clarksville Tennessee (US)**

(72) Inventor: **Sharon, Wilfred John**
**108 Kimbrough Court**
**Clarksville Tennessee (US)**

(74) Representative: **Baillie, Iain Cameron et al**
**c/o Ladas & Parry Isartorplatz 5**
**D-8000 München 2 (DE)**

Courier Press, Leamington Spa, England.

## Description

This invention relates to a bicycle sprocket drive assembly such as is typically used in a chain driven bicycle. The assembly consists of: right and left crank arms, on which the pedals mount; a crank shaft connecting the crank arms (or the unitary combination of those elements in a one-piece structure); and the front or drive sprocket of the bicycle. This front sprocket is engaged by the crank arm-crank shaft combination so that it is driven by the force applied to the pedals.

More particularly, this invention relates to a structure that provides the driving engagement between the crank arm-crank shaft combination, hereinafter referred to as the crank, and the front or drive sprocket.

The structures used previously to drive front sprockets from a crank have included:

1. The use of mounting segments having a polygonal, splined, or other non-rotatable shapes, in cross section, as set forth in U.S. Patent 3,347,112, issued to Alfred Thun on Oct. 17, 1967;

2. The use of a multiple spline arrangement where the splines are teeth extending radially and bent to engage the perforated rim of the sprocket, as set forth in U.S. Patent 3,377,883, issued to Alfred Thun on April 16, 1968;

3. The use of a tug pin welded to a crank arm as set forth in U.S. Patent 3,608,184, issued to Alfred Thun on September 28, 1971;

4. The use of a serrated end on the crank shaft on which is press fitted the sprocket, as set forth in U.S. Patent 3,906,811, issued to Alfred Thun on September 23, 1975; and

5. The use of a multiple spline arrangement where the splines are cold formed in the shoulder against which the sprocket abuts and these splines engage mating splines formed as teeth in the inner periphery of the sprocket mounting hole, as set forth in U.S. Patent Application Serial No. 672,981, filed November 19, 1984 and assigned to the assignee of the present application.

6. The press fitting of a sprocket on the serrated end of a crank is also described in French Patent 1,493,691 where the hub of the crank arm is splayed so as to retain the sprocket in a tight fit.

All of these prior art methods for driving a sprocket from a crank, where they involve an engagement between the crank and the sprocket at the center or hub of the sprocket, have used a shape for the engaging crank area which non-rotatably engages the sprocket by mating with a similarly shaped hub or central mounting hole in the sprocket. Those prior art methods all suffer from the possiblility of early failure of the drive by failure of the material around the central hole of the sprocket. For example, it has been found that the splines on sprocket assemblies which was the mating spline arrangement tend to tear away from the sprocket after lone use when high driving forces are applied to the pedals. Such failures are in the nature of fatigue failures at the high stress regions of the sprocket's spline structure.

In addition to problems with material failures the prior art arrangements have generally required closer tolerances and more careful alignment during assembly than is desired for ease and economy of manufacture. BE—A—466 176 discloses an arrangement which corresponds to the preamble of claim 1.

According to the present invention there is provided a bicycle sprocket drive assembly comprising a crank having sprocket-engaging splines tapered along their drive faces, and a drive sprocket having matching configurations to receive said splines, characterized in that the tapers of the splines are such that the cross-section of the splines remains the same along their radial axis, with the thickness of the splines decreasing as they extend inward from the arm portion to the shaft portion of the crank, in that the mating configurations of the sprocket are depressions cold-formed into its face and having a shape and inside dimensions substantially matching the outside shape and dimensions of the splines and engaging the full radial extent of the splines, and in that means is provided to maintain the splines and depressions in mating engagement.

According to a further aspect of the invention there is provided a bicycle sprocket drive assembly, characterized by a crank having sprocket-engaging splines tapered along their drive faces, said tapers being such that the cross-section of the splines remains the same along their radial axis with the thickness of the splines decreasing as they extend inward from the arm to the shaft part of the crank, a drive sprocket having slots cold formed into its surface said slots having inside dimensions and shape substantially matching the outside dimensions and shape of said splines, and means for maintaining said splines in mating engagement with said slots for operation of said sprocket from said crank to provide a drive of said sprocket which is free of play.

According to a still further aspect of the invention there is provided a method of producing a bicycle sprocket drive assembly, characterized by the steps of forming a crank to have sprocket-engaging splines tapered along their drive faces, cold forming a drive sprocket so that it has tapered spline receiving slots in its surface, assembling the sprocket to the crank so that the tapered splines of the crank closely engage the slots of the sprocket in mating relationship to provide a drive of the sprocket by the crank.

In this manner a crank having a number of splines is combined with a sprocket having mating indentations or slots in its face. These splines and the mating radial slots preferably have tapered driving faces. By cold forming the tapered slots into the front face of the sprocket, as by a stamping process, the removal of material from the sprocket is avoided, and the back face of the sprocket slots, because they are displaced from the remainder of the sprocket, serve to provide the desired alignment of the drive sprocket with the rear or driven sprocket of the bicycle by determining the spacing between the main part of the sprocket and the abutting bearing cone.

The present invention is shown in the following figures, in which like reference characters refer to like parts:

Fig. 1 is a front elevation of a unitary crank arm and shaft assembled in driving engagement to a sprocket by means of a threaded bearing cone (partially broken away) using the novel coupling of the present invention,

Fig. 2 is a partial side elevation showing half of the unitary crank arm and shaft combination showing the tapered splines which engage the sprocket.

Fig. 3 is a cross-section taken on lines 3—3 of Fig. 1, to illustrate the shape of the splines along their long dimension,

Fig. 4 is a cross-section taken on lines 4—4 of Fig. 1 to illustrate in detail the shape of a single spline and its mating slot. This view is taken at ninety degrees to the view of Fig. 3.

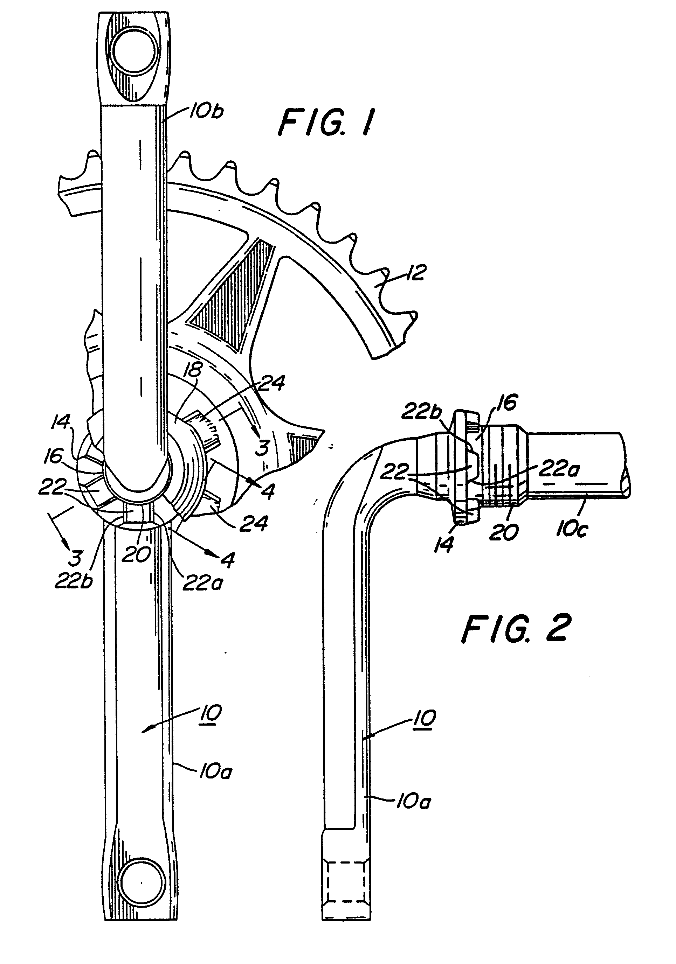

In Fig. 1 a unitary or one-piece crank 10 is shown as having crank arms 10a and 10b connected by crank shaft 10c (Fig. 2) and arranged to be in driving engagement with a sprocket 12. The crank has a collar 14, which serves to retain the sprocket, when the sprocket is appropriately mounted so that its front face is in abutting relationship with the collar and the center hole or hub of the sprocket is mounted on the sprocket flange 16. This relationship between the crank and sprocket is maintained by tightening the nut 18, which is shaped to act as a bearing cone, on threaded journal 20 so that the nut is pressing the sprocket toward the collar 14.

The driving engagement of the crank with the sprocket, shown in Fig. 1, is provided by the engagement of the splines or teeth 22 of the crank with slots 24 in the sprocket. The crank splines are shown as being tapered along their side faces 22a and 22b, that is, along the faces which are essentially the radial faces or driving faces of the splines. These crank splines are designed to intimately engage the matching depressions or slots 24, which can typically be cold formed as by pressing or stamping into the front face of the sprocket. In Fig. 1, the back faces of the slots 24 are all that can be seen. These back faces are parallel to the remainder of the sprocket but displaced by the pressing or stamping operation which forms the slots.

In assembly of the crank and sprocket the back faces of the slots are abutted by the bearing cone 18 which is threaded on the journal 20 and tightened against the sprocket to maintain the sprocket in driving engagement with the crank. Thus, the back faces of the slots serve to determine the spacing between the bearing cone and the main part of the sprocket and thereby determines the alignment between the drive sprocket and the driven sprocket normally mounted on the rear wheel of a bicycle. Good alignment of the sprockets is, of course, necessary for smooth chain operation and is normally provided by a separate spacing washer positioned between the sprocket and the bearing cone during assembly. With the present invention, the spacing washer can be omitted, thus simplifying the assembly operation.

Fig. 2, which is a side elevation of the crank alone, shows more clearly the shape of the splines 22 and their tapered faces 22a and 22b as well as the manner in which the splines project from the collar 14 and join with the sprocket flange 16.

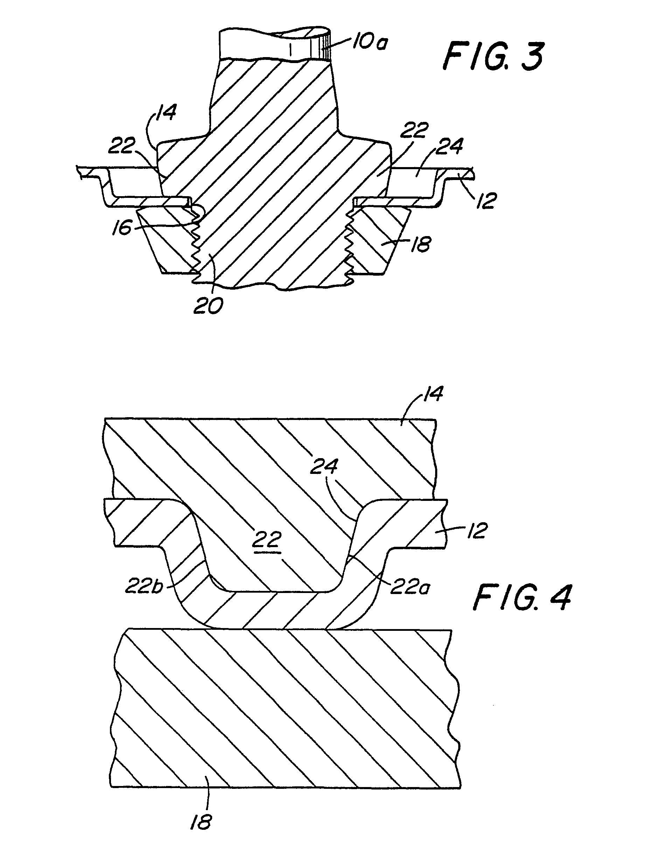

In Fig. 3 further details of the shape of the slots along their long dimension is provided to illustrate the tapered sides of the slots which are engaged by the matching tapered sides of the splines. Preferably the dimensions of the splines and the slots are such that the splines are a tight fit in the slots when the abutting bearing cone is tightened against the sprocket so that there will be no play between the crank and the sprocket. The taper of the drive faces 22a and 22b of the splines, and the taper of the comparable faces of the slots which shows best in Fig. 4 are preferably in the range between 2 and 15 degrees. The taper is kept small to minimize any tendency for a camming action between the splines and the slots. As will be evident to those skilled in the art, the dimensions of the splines and slots may be such that the splines do not bottom in the slots when nut 18 is tightened. A tight fit can then be assured, however, it is necessary to make sure that the tightening of the nut will not cause an "oil-canning" of the sprocket.

It will be evident from the above description that the present invention provides a crank-sprocket assembly which is less subject to fatigue failure or other stress related failures of the sprocket as well as being easier to assemble during manufacture. The reduction in material failures is believed to be related not only to the shapes used in the non-rotatable coupling between the crank and sprocket, but also to the fact that the manner in which those shapes are produced does not require the removal of material from the central mounting hole of the sprocket as is required in all of the prior art arrangements where the drive is through the hub of the sprocket. The added ease of assembly is not only because of the omission of the spacing washer which has been referred to, but also because of the ease with which the sprocket may be mated with the crank as a result of the taper in the splines and the slots, which makes the alignment of the two parts during assembly less critical.

## Claims

1. A bicycle sprocket drive assembly comprising a crank (10) having sprocket-engaging splines (22) tapered along their drive faces (22a, 22b), and a drive sprocket (12) having matching configurations to receive said splines, characterized in that the tapers of the splines (22) are such that the cross-section of the splines remains the same along their radial axis, with the thickness of the splines decreasing as they extend inward from the arm portion (10a) to the shaft portion (10c) of the crank (10), in that the mating configurations of the sprocket (12) are depressions (24) cold-formed into its face and having a shape and inside dimensions substantially matching the outside shape and dimensions of the splines (22) and engaging the full radial extent of the splines, and in that means (18) is provided to maintain the splines (22) and depressions (24) in mating engagement.

2. A bicycle sprocket drive assembly according to claim 1, characterized in that the means (18) for maintaining engagement of the splines (22) with the depressions (24) includes a flange (14) on the crank (10) for retaining the sprocket (12), and a nut (18) threadably engaging the crank for pressing the sprocket against said flange.

3. A bicycle sprocket drive assembly according to claim 2, characterized in that the nut (18) is shaped to function as a bearing cone.

4. A bicycle sprocket drive assembly according to claim 2 or 3, characterized in that the depressions (24) are of such depth that their back faces are displaced from the front face of the sprocket (12) by an amount required for the desired spacing between the sprocket and nut (18) to thereby determine the alignment of the sprocket with respect to other parts of the bicycle.

5. A bicycle sprocket drive assembly according to any one of the preceding claims, characterized in that the taper of the drive faces (22a, 22b) of the splines (22) and of the mating faces of the sprocket depressions (24) is in the range of 2—15 degrees.

6. A method of producing a bicycle sprocket drive assembly, characterized by the steps of forming a crank (10) to have sprocket-engaging splines (22) tapered along their drive faces (22a, 22b) cold-forming a drive sprocket (12) so that it has tapered spline receiving depressions (24) in its face, assembling the sprocket to the crank so that the tapered splines of the crank closely engage the depressions of the sprocket in mating relationship to provide a sprocket drive assembly as set forth in claim 1.

7. A method according to claim 6, characterized in that the depressions (24) are formed in sprocket (12) by stamping.

**Patentansprüche**

1. Kettenradantriebsanordnung für Fahrräder mit einer Kurbel (10) die mit zum Eingriff in ein Kettenrad bestimmten, längs ihrer Abtriebsflächen (22a, 22b) verjüngten Keilen (22) ausgebildet ist, und einem zur passenden Aufnahme der Keile (22) ausgebildeten Antriebskettenrad (12), wobei die Keile (22) derart verjüngt sind, daß der Querschnitt der Keile längs ihrer radialen Achse gleich bleibt und die Dicke der Keile von dem Armteil (10a) einwärts zu dem Zapfenteil (10c) der Kurbel (10) abnimmt, daß das Kettenrad (12) in seiner Stirnfläche durch Kaltverformung mit entsprechenden Vertiefungen (24) ausgebildet ist, die in ihrer Form und in ihren Innenmaßen der Außenform und den Außenmaßen der Keile (22) im wesentlichen entsprechen und die Keile in deren ganzer radialer Ausdehnung aufnehmen, und daß Mittel (18) vorgesehen sind, die die Keile (22) und die Vertiefungen (24) im passenden Eingriff miteinander halten.

2. Kettenradantriebsanordnung für Fahrräder nach Anspruch 1, dadurch gekennzeichnet, daß die Mittel (18) zum Imeingriffhalten der Keile (22) und der Vertiefungen (24) einen auf der Kurbel (10) vorgesehenen Flansch (14) zum Festhalten des Kettenrades (12) und eine auf die Kurbel aufgeschraubte Mutter (18) zum Anpressen des Kettenrades gegen den genannten Flansch umfassen.

3. Kettenradantriebsanordnung für Fahrräder nach Anspruch 2, dadurch gekennzeichnet, daß die Mutter (18) geeignet ist, als Lagerkonus zu wirken.

4. Kettenradantriebsanordnung für Fahrräder nach Anspruch 2 oder 3, dadurch gekennzeichnet, daß die Vertiefungen (24) so tief sind, daß ihre Rückflächen von der Stirnfläche des Kettenrades (12) um eine solche Strecke versetzt sind, daß zwischen dem Kettenrad und der Mutter (18) ein Abstand vorhanden ist, der bewirkt, daß das Kettenrad mit anderen Teilen des Fahrrades fluchtet.

5. Kettenradantriebsanordnung für Fahrräder nach einem der vorhergehenden Ansprüche, dadurch gekennzeichnet, daß die Verjüngung der Abtriebsflächen (22a, 22b) der Keile (22) und der Paßflächen der Vertiefungen (24) des Kettenrades im Bereich von 2 bis 15 Grad liegen.

6. Verfahren zum Herstellen einer Kettenradantriebsanordnung für Fahrräder, gekennzeichnet durch folgende Schritte: eine Kurbel (10) wird einem zum Eingriff in ein Kettenrad bestimmten Kellen (22) ausgebildet, die längs ihrer Antriebsflächen (22a, 22b) verjüngt sind; ein Antriebskettenrad (12) wird durch Kaltverformung in seiner Stirnfläche mit vertiefungen (24) zur Aufnahme verjüngter Keile ausgebildet; und der Kettenrad und die Kurbel werden so zusammengebaut, daß die verjüngten Keile der Kurbel passend in die Vertiefungen des Kettenrades eingreifen und dadurch eine Kettenradantriebsanordnung nach Anspruch 1 erhalten wird.

7. Verfahren nach Anspruch 6, dadurch gekennzeichnet, daß die Vertiefungen (24) in dem Kettenrad (12) durch Stanzen ausgebildet werden.

**Revendications**

1. Ensemble d'entraînement du plateau d'une bicyclette, comportant une manivelle (10) présentant des cannelures (22) de venue en prise avec le plateau qui s'amincissent le long de leurs faces d'entraînement (22a, 22b) et un plateau d'entraînement (12) présentant des configurations correspondantes pour recevoir lesdites cannelures, caractérisé en ce que les amincissements des cannelures (22) sont tels que la section droite des cannelures reste le même le long de leur axe radial, l'épaisseur des cannelures allant en diminuant au fur et à mesure qu'elles s'étendent vers l'intérieur, depuis la portion (10a), côtébras, vers la portion (10c), côtéarbre, de la manivelle (10), en ce que les configurations correspondantes du plateau (12) sont des creux (24) qui sont formés à froid dans sa surface, qui ont une forme et des dimensions intérieures correspondant substantiellement à la forme et aux dimensions extérieures des cannelures (22), et qui viennent en prise avec toute l'extension radiale des cannelures, et en ce qu'un moyen (18) est prévu pour maintenir les cannelures (22) et les creux (24) en prise d'accouplement.

2. Ensemble d'entraînement du plateau d'une bicyclette selon la revendication 1, caractérisé en ce que le moyen (18) prévu pour maintenir les cannelures (22) en prise avec les creux (24) comporte un collet (14) sur la manivelle (10) pour maintenir le plateau (12), ainsi qu'un écrou (18) qui se visse sur la manivelle pour presser le plateau contre ledit collet.

3. Ensemble d'entraînement du plateau d'une bicyclette selon la revendication 2, caractérisé en ce que l'écrou (18) a une forme telle qu'il fonctionne comme cône portant.

4. Ensemble d'entraînement du plateau d'une bicyclette selon la revendication 2 ou 3, caractérisé en ce que les creux (24) ont une profondeur telle que leurs faces arrière soient décalées de la face avant du plateau (12) d'une distance nécessaire pour l'espacement désiré entre le plateau et l'écrou (18), de façon à déterminer l'alignement du plateau par rapport à d'autres parties de la bicyclette.

5. Ensemble d'entraînement du plateau d'une bicyclette selon l'une quelconque des revendications précédentes, caractérisé en ce que l'angle selon lequel les faces d'entraînement (22a, 22b) des cannelures (22) sa rapprochent et celui des faces associées des creux (24) du plateau valent de 2 à 15 degrés.

6. Procédé de fabrication d'un ensemble d'entraînement du plateau d'une bicyclette, caractérisé par les étapes consistant à former une manivelle (10) de façon qu'elle présente des cannelures (22) de venue en prise avec le plateau qui s'amincissent le long de leurs faces d'entraînement (22a, 22b), à former à froid un plateau d'entraînement (12) de façon qu'il présente, dans sa surface, des creux s'amincissant (24) de réception de cannelures, à assembler le plateau sur la manivelle de façon que les cannelures s'amincissant de la manivelle viennent étroitement en prise avec les creux du plateau, en relation d'accouplement, pour fournir un ensemble d'entraînement du plateau comme mentionné dans la revendication 1.

7. Procédé selon la revendication 6, caractérisé en ce que les creux (24) sont formés dans le plateau (12) par entampage.

FIG. 1

FIG. 2

FIG. 3

FIG. 4